# EUROPEAN PATENT APPLICATION

(11) **EP 3 691 081 A1**
(43) Date of publication of application: **05.08.2020**
(21) Application number: 18858866.9
(22) Date of filing: 16.08.2018
(51) Int. Cl.: H02J 7/35, H02J 3/38, H02J 1/12, H02M 3/335, C25B 9/04

(54) **HYBRID SYSTEM FOR GENERATING AND SUPPLYING ELECTRIC POWER USED IN AN ELECTROLYSIS METHOD FOR PRODUCING NON-FERROUS METALS**

(30) Priority: 25.09.2017 BR 102017020419
(71) Applicant: Votorantim Metais Zinco S.A., 39205-000 Três Marias - MG (BR); Universidade Federal De Minas Gerais - UFMG, 31270-901 Belo Horizonte - MG (BR)
(72) Inventor: MOREIRA GOMES, Rodrigo Alberto, 30310-390 Belo Horizonte - MG (BR); GOMES LACERDA, Flávio Augusto, Belo Horizonte - MG 30170-044 (BR); CARDOSO FILHO, Braz De Jesus, 31255-720 Belo Horizonte - MG (BR); PEREIRA PORTO, Matheus, 31330-500 Belo Horizonte - MG (BR); LEITE SILVA MONTEIRO, Juliana Karla, 31035-540 Belo Horizonte - MG (BR)
(74) Representative: Lavoix
(86) International application number: PCT/BR2018/050289
(87) International publication number: WO 2019/056079

(57) **Abstract**

The present invention refers to a hybrid system for generating electric power used in an electrolysis process for obtaining metals, according to which the integration of two or more sources of electric current occurs, one of which being the grid (SIN) and the others being distributed generation sources, connected to the load supply node, with control of the total direct current to be injected in the load of the process.

The renewable or non-renewable distributed generation sources may be: solar photovoltaic, concentrating solar, wind, fossil fuel generator, diesel generator, steam turbines, combined cycle plants etc.

The power generation system may be used in an electrolysis process for obtaining metals such as zinc, copper, aluminum or nickel.

## Description

### TECHNICAL FIELD OF THE INVENTION

The power supply of industrial processes that require direct current, such as the electrolysis processes used in the manufacture of metals, is invariably made through transformers and rectifiers, which convert electric power in alternating current from the provider's grid to its direct form. The present innovation proposes that such industries can use other forms of distributed generation to contribute to the power supply of these processes, so that the generated energy is injected directly into the process, and not delivered to the provider's grid and later compensated financially. Thus, there is a better use of the energy generated locally, and a reduction in losses associated with the portion of energy that is absorbed from the power grid.

### BACKGROUND OF THE INVENTION

Electric power consumption is an important part of the cost matrix of any industry, and a way to reduce these costs is through distributed generation plants. In this way, it is possible to generate energy locally more cheaply and thus reduce the price paid to energy providers.

However, the usual way that such systems are constituted is that the energy generated locally is injected into the provider's grid, being responsible for making the reduction of costs between what was consumed and what was generated. This energy flow causes unnecessary losses and costs for the industry, which could often take greater advantage of the energy generated simply by using it directly in its process.

Photovoltaic energy, for example, generated through semiconductor materials subjected to the photoelectric effect, is inherently produced in direct current (DC). Since electrical distribution systems worldwide are mostly made in alternating current (AC), the existing commercial solutions of converters for solar applications are always based on DC/AC conversion (so-called "inverters").

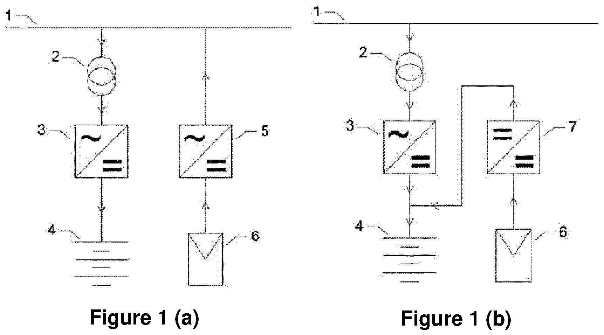

In the industrial environment, in particular, there are processes that demand energy on a large scale in the form of DC. An example would be the Electrolysis process, used in the production of metals such as aluminum, nickel, copper or zinc. In such a process, the energy is in the form of DC using transformers connected to the AC grid and rectifiers (which are converters of the type AC/DC), as shown in Figure 1 (a).

An industrial plant that carries out the electrolysis process and wishes to build a photovoltaic plant to generate energy and reduce electricity consumption during the hours of solar incidence would invariably have to install a system connected to the AC grid. In other words, the energy would be generated in DC in the photovoltaic panels, converted to AC in the inverter, transmitted by the grid to the transformer and transformed again to DC in the rectifier. Knowing that the inverter, the transformer and the rectifier have losses, it can be concluded that a significant portion of the energy generated would be lost in these elements before being used in the process, due to the transformations between DC and AC.

The present invention proposes that in this case, instead of using a DC/AC inverter at the interface of the photovoltaic plant with the grid, only a DC/DC converter is used and that the plant is directly interconnected to the process. Such a converter would be used to perform the maximum power point tracking (MPPT) of the plant and to match the voltage levels between the photovoltaic generation and the process. As a result, the portion of energy generated at the plant would suffer fewer losses, as it would not pass through the rectifier or the transformer. Figure 1 (b) illustrates this solution, wherein the energy deriving from the solar plant is delivered to the process and only the complementary portion is drained from the power grid.

The attached figures illustrate: Figure 1 (a) illustrates the conventional solution for the use of solar energy to supply a process with DC load and Figure 1 (b) illustrates the solution proposed by the invention.

In addition to reducing losses by reducing the current in the transformer and rectifier, the proposed DC/DC converter would also present nominally fewer losses than the DC/AC inverter for the same application. This is because the inverter is generally composed of three main stages, an input stage which is a DC/DC converter responsible for making the MPPT, a DC bus and an inverter bridge. Thus, the DC/DC converter that would be used is basically the first stage found in conventional inverters, and eliminating the need for the DC bus and the inverter bridge, a significant portion of the total losses of this equipment is also eliminated.

Some works in the scientific community already propose the use of distributed generation or photovoltaic energy directly in direct current, but in general, in the context of smaller applications, such as in micro-grids [1, 3] or isolated systems [2]. There are also studies wherein it is proposed to perform the electrolysis process on a laboratory scale using a DC/DC conversion system and photovoltaic energy [4, 5], however, these studies aimed at powering the process solely by the solar source, and on how to control the currents in order to satisfy the need of the electrolysis process and, at the same time, the limitations of photovoltaic generation. All of these applications identified in the literature differ from the solution proposed in this innovation, since it proposes the direct use of energy generated specifically in large industrial processes, and as a complementary source to the existing power grid, not as a single source in the supply of isolated processes.

The references cited above are indicated below:
[1] H. Elfeqy, M. Shahin, A. Al-Rumaihi, A. Massoud, and A. Gastli, "A highly efficient PV power system for DC MicroGrids," in 2016 IEEE Symposium on Computer Applications & Industrial Electronics (ISCAIE), 2016, pp. 183-188.
   The solution proposed in paper [1] provides for the supply of DC loads directly from the solar source, eliminating the conversion to AC grid, however, in a context of micro-grids, that is, small electrical systems that can be equipped with different loads and different generation sources, and that work in an integrated way through electronic converters. It diverges from the proposed innovation that envisages using photovoltaic energy in a large-scale, industrial application, directed to a particular process.
[2] U. Shah, P. Kadam, and G. Lahoti, "Control of standalone solar PV system in varying operating conditions for DC loads," in 2016 IEEE International Conference on Engineering and Technology (ICETECH), 2016, no. March, pp. 1181-1186.
   Paper [2] proposes the use of photovoltaic energy to supply DC load directly, however in small isolated systems, that is, to supply loads that are not connected to the electrical system. This solution differs from the proposed innovation, since it presumes its use in conjunction with the conventional grid, acting in large processes as a complementary energy source, which reduces the consumption of the AC power grid, and not as the only source of energy.
[3] N. Zhang, D. Sutanto, and K. M. Muttaqi, "A four-port DC-DC converter to integrate energy storage system and solar PV to supply the grid and local load demand," in 2015 Australasian Universities Power Engineering Conference (AUPEC), 2015, pp. 1-6.
   Paper [3] proposes a new topology of DC/DC converter that can be used in photovoltaic generation applications directly powering DC loads. However, it does not consider the possible applications, as well as the restrictions and specificities that would exist in the use of this converter for the industrial applications that the proposed innovation intends to achieve.
[4] J. Appelbaum, K. Khouzam, and Y. Dagan, "Photovoltaic Systems for Electrolysis Using a Maximum Power Point Tracker," in 2006 IEEE 24th Convention of Electrical & Electronics Engineers in Israel, 2006, pp. 21-24.
   It proposes the use of photovoltaic panels to power a small-scale electrolysis process (disinfection of swimming pools). Paper [4] diverges from the proposed solution because it does not use photovoltaic generation as a complementary source of energy to a larger process, but rather it tries to use photovoltaic generation as a single source of energy for a small application, which would be fed in isolation from the power grid. Therefore, it differs from the proposed solution.
[5] S. Dahbi, A. Aziz, N. Benazzi, and M. Elhafyani, "Optimized hydrogen production by a photovoltaic - Electrolysis system DC/DC converter and water-flow controller," in 2015 3rd International Renewable and Sustainable Energy Conference (IRSEC), 2015, pp. 1-6.

Analogous to the case of paper [4], paper [5] proposes to use photovoltaic energy directly in DC to power a hydrogen production electrolysis process, but again, the focus is that solar energy is the sole source of the process, and productivity is subject to variations of this generation, since there is no interface with the common grid.

Documents CN 204999986, CN 105112947, CN 202906489, CN 202626306 and US 20060065302 deal with solar generation systems that require storage in batteries, or that are directly used to power water electrolysis processes, which do not require as much current stability. In the case of the present invention, the system guarantees great stability within the electrolytic cell for obtaining metals, such as zinc or nickel, among others, in a hybrid system of energy deriving from the grid (SIN) and from an alternative solar or wind source.

### PROBLEM THAT THE INVENTION INTENDS TO SOLVE

Reduction of losses in the use of energy produced by distributed generation sources in industrial processes fed by direct current.

Eventually, the invention may also provide a more feasible alternative for reusing large unused areas, such as tailings dams or other deactivated mining areas, common to the industries that this invention aims to reach.

### ADVANTAGES OF THE INVENTION

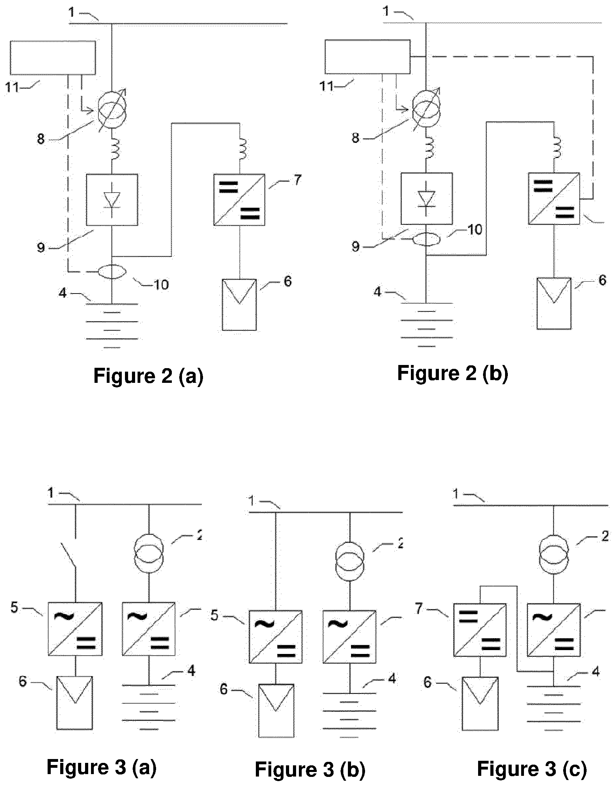

The main advantage of this innovation is the better use of energy deriving from distributed generation plants in industrial processes powered by direct current. This is due to the reduction of losses in the handling of energy, from its generation to consumption. Figure 3 illustrates with a fictitious example how these losses can be reduced in the case of a photovoltaic plant.

Figure 3 illustrates a numerical example of the decreasing of losses with the use of the innovation.

According to Figure 3 (a), it is assumed an industrial process that uses energy in the form of DC at a nominal value of 100%. Usually these systems are built using transformers and rectifiers, whose nominal efficiencies may vary according to the application, but which can typically be assumed to be 98% and 95%, respectively. In this case, the total energy demanded from the power grid is actually 107.4%, that is, a consumption 7.4% higher than the load actually demanded, due to the losses in the transformer and rectifier.

This same industry is now considered to have a photovoltaic generation plant whose maximum capacity is 50% of the value demanded by the DC load. Assuming that energy would be injected into the AC grid through an inverter, and that this inverter has an efficiency of 95% (also typical value), then to feed the load it would be necessary to demand from the power grid 59.9% of its total energy, as shown in Figure 3 (b). This means that, although the load consumes 100% and the plant generates 50%, the demanded portion of the grid is 9.9% greater than it would be if there were no losses in the components. This alternative illustrates the commercial solution available today in the state of the art.

Subsequently, it is noticed in Figure 3 (c) that in the case of using a DC/DC converter directly connected to the load, whose efficiency would be better than that of the inverter (considered herein 98%), for the same photovoltaic plant and same DC load, the provider's demand would be 54.8%. This value means that more than 5% of the total energy consumed by the DC load could be saved using the proposed innovation instead of the technology commercially available today.

It is worth mentioning that this is just a fictitious example, and that the values considered for the efficiency of the devices and the energies of the load and photovoltaic generation could vary. The gains in technology may be greater or lesser, but it will invariably show gains when compared to the technology available in the state of the art.

In addition to the gain observed in terms of loss reduction, both those related to the energy generated and the energy coming from the grid, it must be added that the proposed solution tends to be cheaper to implement, since the associated converters tend to be simpler than their correspondents in the existing application in the state of the art. Additionally, in cases where power storage elements are used, it opens up the possibility for the proposed system to allow the use of the generated energy during hours with more expensive fees, affording more savings to its controller.

Another advantage that can be attributed to this innovation is the fact that it serves as an incentive for such companies to invest in alternative and renewable forms of energy. As a result, they contribute to the diversification of the energy matrix and reduce the consumption of energy deriving from the electrical system, which in many cases may come from polluting sources (thermals with burning of fossil fuels, for example).

It should also be added that companies that would typically be interested in this technology often have large areas available for these distributed generation units to be implemented. Mining and metallurgy companies usually have large roof areas, and deactivated mining areas or tailings dams, and building a photovoltaic plant in these areas, for example, could serve as an alternative to revitalize these large spaces, which at a certain point have no other practical use. This "facility", or "predisposition" for the construction of such generation units is an advantage, since it makes the enterprise more economically viable.

### SUMMARY OF THE INVENTION

The present invention refers to a hybrid system for generating and supplying electric power used in the electrolysis process for obtaining metals, according to which the integration of two or more sources of electric current occurs, one of which being the grid (SIN) and the others being distributed generation sources, connected to the load supply node, with control of the total direct current to be injected in the load of the process. The system also comprises the matching of the current dynamics of the grid and the distributed generation source.

The renewable or non-renewable distributed generation sources can be: solar photovoltaic, concentrating solar, wind, fossil fuel generator, diesel generator, steam turbines, combined cycle plants etc.

The power generation system can be used in an electrolysis process for obtaining metals such as zinc, copper, aluminum or nickel.

### BRIEF DESCRIPTION OF THE DRAWINGS

- Figure 1 (a) illustrates the conventional solution for using solar energy to supply a process with DC load, and Figure 1 (b) illustrates the solution proposed by the invention.
- Figure 2 (a) illustrates a system with the connection point of the distributed generation upstream of the current measurement, and Figure 2 (b) illustrates a system with the connection point downstream of the current measurement.
- Figure 3 illustrates the decrease in losses with the use of the innovation.
- Figure 4 illustrates an assembly of the proposed invention.

Reference numbers: 1 - Power grid AC, 2 - Transformer, 3 - Rectifier (AC/DC converter), 4 - Electrolysis (DC load), 5 - Inverter (DC/AC converter), 6 - Photovoltaic plant, 7 - DC/DC converter, 8 - Transformer with on-load tap-switch, 9 - Diode rectifier, 10 - Current measurement point, 11 - Current control system.

### DETAILED DESCRIPTION OF THE INVENTION

Industrial processes powered by direct current, such as electrolysis, have an electrical load characteristic that is similar to that of a battery in loading process. That is, the load behaves like a voltage source, and a current must be injected with an approximately fixed and constant value, to ensure optimum productivity and material quality, as specified. Thus, a converter with current source characteristics must connect the power grid to this process, since the direct interconnection of the grid that has a voltage source characteristic cannot be used with a load that also has these characteristics, under penalty of not having the current control required by the process to obtain the desired productivity and quality.

This "electrical nature" to which these processes are subject makes it possible for other current sources to be connected to the same load supply node, so that independent and parallel sources simultaneously contribute to the load supply. The present innovation suggests exactly that distributed generation sources are connected to the load in this way, in order to avoid that the generated energy is returned to the grid before being used in the process.

For this to be possible, some requirements must be met. The first one concerns the matching of the distributed generation with the aspect of a direct current source. Taking the solar photovoltaic generation as an example, this occurs intrinsically in the form of DC, so to use it directly in industrial DC processes, a DC/DC converter is necessary to match the generation and process voltage levels, simultaneously performing maximum power point tracking (MPPT) and operating as a current source. Similarly, a distributed generation system by wind energy, for example, can be used under the same context through an AC/DC converter that performs the same functions.

It is important to highlight that commercial converters currently used in distributed generation applications are invariably designed to supply their energy to the alternating current distribution grid. For the cited examples, in photovoltaic generation, the converters normally have a DC/DC stage and another DC/AC stage, while in wind generation the converters have an AC/DC stage and another DC/AC stage. Therefore, based on the proposed innovation, there is already a gain compared to the state of the art in terms of the manufacturing costs of the converters and loss reduction, since once consumption will be in DC, there will be no need, in any case, for a converter with DC/AC output stage.

The second requirement that enables the proposed invention concerns the control of the total current that will be injected into the load. As previously exposed, there is a need for this current to be at a certain value, approximately constant, and since it is proposed to include new sources of current contributing to the supply of a same load, there is a need to equalize these values so as not to harm the process. Knowing that the total current in the load will be the sum of the currents coming from the grid and from the distributed generation, and also that it is desired to extract the maximum possible energy from the distributed generation, then it is necessary to reduce the current coming from the grid in a way proportional to the contribution of energy coming from the generation.

The industrial units that operate such processes have a control system that allows the operator to determine a desired current value (set-point). Thus, the system increases or decreases the current supplied to the load through some appropriate mechanism (for example, variation of transformer taps or firing angle of thyristors in rectifiers), until the desired value is observed at the measurement point. Therefore, one way to make the proposed invention viable is to make the injection of current coming from the distributed generation sources be done at a point upstream of the original measurement point of the system. Thus, the control associated with the current coming from the power grid will naturally reduce this value when there is an increase in the current of the distributed generation, and vice versa.

Alternatively, if there is no physical means for this injection of the generation current to be done upstream of the measurement point, the current compensation can be done by means of communication signals, informing the control system of the measured current value of the distributed generation. Thus, the control system can make the compensation between the set point determined by the operator, minus the value registered by the distributed generation, generating a new set point to be used only by the source coming from the power grid. Figure 2 presents an illustration of how these two connection possibilities should take place, considering that the grid conversion system is made by a transformer with tap variation and a diode rectifier, while the distributed generation is characterized by a solar photovoltaic generation plant.

Attached is Figure 2 (a) that illustrates a system with the connection point of the distributed generation upstream of the current measurement, and Figure 2 (b) that illustrates a system with the connection point downstream of the current measurement (current injected by the distributed generation needs to be reported to the process control via the data network).

The third requirement for the invention concerns the matching of the dynamics of the original current control of the system and the distributed generation. This need arises from the fact that in distributed generations, particularly in renewable sources, there is a constant possibility of sudden and unexpected variations in energy generation, which requires reactions from the control system in the same proportions. Take as an example the case of a photovoltaic generation plant that contributes to the supply of an electrolysis plant. If there is a sudden shading over the plant, the current supplied to the process by this energy source tends to fall rapidly, requiring the control system to recompose this loss by increasing the portion coming from the grid. This creates a need for the control to be able to adapt to different set-point values in a time that can be relatively short.

This matching of dynamics must be measured as follows: first, the maximum dynamic capacity of the original control system to adapt to a new current set-point is determined. Then, the maximum current variation that can be observed in distributed generation is verified, according to its nature (photovoltaic, wind, fossil fuel burning, whatever). In cases where the process has a current variation rate capacity higher than that of distributed generation, then the requirement is validated and the solution is possible. In cases where the system is unable to adapt in the same current variation rates expected for the distributed generation, then some alternatives must be taken into account so that no undesired variations in the value of the total current flowing over the load occur.

The first alternative in this case is to limit the maximum capacity of the distributed generation to a value that, in absolute terms, never exceeds the rate of variation of the current limit of the process. However, this alternative may be undesirable in cases where it is tried to obtain the maximum energy production with distributed generation (take as an example a solar photovoltaic plant that could not occupy all the available space so that its dynamics do not exceed that of the process). A second alternative would be not to limit the total capacity, but rather to limit the production of energy so as not to extract the maximum possible in cases where the dynamics of this event exceed the dynamics of the process (for example, after the passage of clouds over a solar plant, it could not use all the energy of the sun's reincidence immediately, until the process equalized its current at the compatible levels). For the example cited, a way to improve this dynamic would be the use of weather forecasting algorithms, which would help the system to predict the dynamics of solar photovoltaic generation, alleviating its variations.

Finally, a third alternative would be the use of power storage elements, such as battery banks. In this way, the energy generated by the more accelerated dynamics regimes could be stored to gradually be supplied to the process within a slower dynamic and that meets the limit imposed by the control system. In this case, the solution is technically adequate, but it has a cost bias that would not be observed if the first two alternatives could be used.

Fulfilling the three listed requirements, the proposed innovation is not only technically feasible but it can generate benefits in reducing acquisition costs (cheaper converters), reducing losses and saving energy. It is worth mentioning that any topologies of DC/DC or AC/DC converters can be used to implement the proposed innovation, observing the operating characteristic as a current source.

The system includes the following variants:
- Distributed generation, which can be any renewable or non-renewable source, such as solar photovoltaic, concentrating solar, wind, fossil fuel generator, steam turbines, combined cycle plants etc.
- Converters used that can be in any topology, as long as in direct current and operating as a current source (DC/DC or AC/DC, isolated or not etc.)
- Supply of the load of the process by more than one distributed generation source in addition to the supply coming from the grid, such as a photovoltaic plant and diesel generator etc.
- Incorporation of power storage elements, favoring the dynamic service of the process and enabling the use of energy generated at specific times (obtaining, for example, tariff gains).
- Use of forecasting algorithms to assist in the dynamics in case the distributed generation is of the solar type.
- Injection of the distributed generation current upstream or downstream of the process measurement point, as shown in Figure 2.
- Central converters or multiple converters favoring, for example, in the case of solar plants, a greater dispersion of the MPPT algorithms.

The following example has a merely illustrative nature, and it should not be taken for purposes of limiting the scope of the invention.

### EXAMPLE

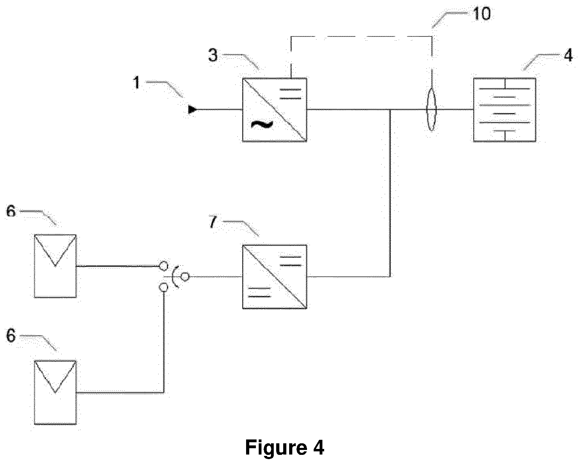

Figure 4 presents an experimental assembly performed as a proof of concept for the proposed innovation. An electrolysis cell for production of zinc on a laboratory scale (No. 4) has the following electrical characteristics: current for optimal productivity 25.84 A, battery voltage in the condition of optimal productivity 25 to 28 V, rated power consumed 646 W to 723 W.

The electrolysis cell is powered by a rectifying source (No. 3) connected to the 127 V phase-neutral AC power grid (No. 1). This source has a maximum output power of 1000 W and it can operate in current regulation mode, being programmed to present 25.84 A of output current.

Other power devices are then coupled to the system. Two sets of photovoltaic panels of different technologies or not (No. 6) can be used through a selector switch. Its nominal electrical characteristics are: voltage at the maximum power point 71 V, current at the maximum power point 4.5 A, rated power 319.5 W.

In order for the photovoltaic system to be used to supply the electrolysis cell, it is necessary to use a DC/DC converter (No. 7). This converter has the following characteristics: "lowering" (Buck) topology, nominal input voltage 71 V, nominal output voltage 28 V, operation as current source, maximum power point tracking (MPPT) algorithm.

The output of the DC/DC converter (No. 7) is connected internally to the power supply (No. 3) at a node that is positioned before the current measuring device (No. 10).

During periods when there is no solar incidence, the photovoltaic panels (No. 6) are not producing any energy, so there is no contribution from the DC/DC converter (No. 7) in the electrolysis supply (No. 4), and the source (No. 3) imposes the current of 25.84 A on the load, which causes the voltage at the node to be approximately 28 V.

As the hours progress, the solar panels begin to generate energy. The DC/DC converter extracts the maximum power for that level of solar irradiation, and converts it into an output current that is inserted into the load supply node. This current adds to the current supplied by the source and proceeds to the electrolysis cell.

The current meter indicates to the source that the current being observed is slightly above that which has been programmed, and with this, the source decreases the portion of energy that drains from the 127 V power grid until the measured value is equal to 25.84 A. Over the course of the day, numerous variations of this type will occur, accompanying the increase and decrease in solar incidence.

## Claims

1. HYBRID SYSTEM FOR GENERATING AND SUPPLYING ELECTRIC POWER USED IN AN ELECTROLYSIS PROCESS FOR OBTAINING NON-FERROUS METALS **characterized by** occurring the integration of two or more sources of electric current, one of which being the grid (SIN) and the others being distributed generation sources, connected to the load supply node, with control of the total direct current to be injected in the load of the process.

2. HYBRID SYSTEM FOR GENERATING AND SUPPLYING ELECTRIC POWER USED IN AN ELECTROLYSIS PROCESS FOR OBTAINING NON-FERROUS METALS according to claim 1, **characterized by** comprising different renewable or non-renewable distributed generation sources, such as solar photovoltaic, concentrating solar, wind, fossil fuel generator, diesel generator, steam turbines, combined cycle plants etc.

3. HYBRID SYSTEM FOR GENERATING AND SUPPLYING ELECTRIC POWER USED IN AN ELECTROLYSIS PROCESS FOR OBTAINING NON-FERROUS METALS according to claim 1, **characterized by** comprising converters in any topology provided that in direct current and operating as a current source (DC/DC or AC/DC, isolated or not etc.).

4. HYBRID SYSTEM FOR GENERATING AND SUPPLYING ELECTRIC POWER USED IN AN ELECTROLYSIS PROCESS FOR OBTAINING NON-FERROUS METALS according to claim 3, **characterized by** comprising a DC/DC converter in the case of using a solar photovoltaic-type distributed generation source and comprising a AC/DC converter in the case of using a wind-type distributed generation source.

5. HYBRID SYSTEM FOR GENERATING AND SUPPLYING ELECTRIC POWER USED IN AN ELECTROLYSIS PROCESS FOR OBTAINING NON-FERROUS METALS according to claim 1, **characterized by** comprising injection of distributed generation upstream or downstream of the original measurement point of the process.

6. HYBRID SYSTEM FOR GENERATING AND SUPPLYING ELECTRIC POWER USED IN AN ELECTROLYSIS PROCESS FOR OBTAINING NON-FERROUS METALS according to claim 5, **characterized by** comprising injection of the current deriving from the distributed generation sources upstream of the original measurement point of the process.

7. HYBRID SYSTEM FOR GENERATING AND SUPPLYING ELECTRIC POWER USED IN AN ELECTROLYSIS PROCESS FOR OBTAINING NON-FERROUS METALS according to claim 5, **characterized by** comprising the current compensation downstream of the feed to the process, using communication and information signals to the control system.

8. HYBRID SYSTEM FOR GENERATING AND SUPPLYING ELECTRIC POWER USED IN AN ELECTROLYSIS PROCESS FOR OBTAINING NON-FERROUS METALS according to claim 1, **characterized by** comprising a system for matching the energy of the grid and the distributed generation to feed the process, being able to determine the maximum capacity of the original control system.

9. HYBRID SYSTEM FOR GENERATING AND SUPPLYING ELECTRIC POWER USED IN AN ELECTROLYSIS PROCESS FOR OBTAINING NON-FERROUS METALS according to claim 8, **characterized by** comprising calculation of the sum of the currents deriving from the grid and the distributed generation.

10. HYBRID SYSTEM FOR GENERATING AND SUPPLYING ELECTRIC POWER USED IN AN ELECTROLYSIS PROCESS FOR OBTAINING NON-FERROUS METALS according to claim 1, **characterized by** comprising a control system capable of adapting to different set-point values.

11. HYBRID SYSTEM FOR GENERATING AND SUPPLYING ELECTRIC POWER USED IN AN ELECTROLYSIS PROCESS FOR OBTAINING NON-FERROUS METALS according to claim 1, **characterized by** comprising the determination of the maximum capacity of distributed generation so that it does not exceed the limit current variation of the process.

12. HYBRID SYSTEM FOR GENERATING AND SUPPLYING ELECTRIC POWER USED IN AN ELECTROLYSIS PROCESS FOR OBTAINING NON-FERROUS METALS according to claims 1 or 3, **characterized by** comprising central converters or multiple converters, favoring a greater dispersion of MPPT algorithms.

13. HYBRID SYSTEM FOR GENERATING AND SUPPLYING ELECTRIC POWER USED IN AN ELECTROLYSIS PROCESS FOR OBTAINING NON-FERROUS METALS according to claim 1, **characterized by** comprising the use of forecasting algorithms to assist the dynamics in case the distributed generation is of the solar type.

14. HYBRID SYSTEM FOR GENERATING AND SUPPLYING ELECTRIC POWER USED IN AN ELECTROLYSIS PROCESS FOR OBTAINING NON-FERROUS METALS according to claim 1, **characterized by** comprising power storage elements.

15. HYBRID SYSTEM FOR GENERATING AND SUPPLYING ELECTRIC POWER USED IN AN ELECTROLYSIS PROCESS FOR OBTAINING NON-FERROUS METALS according to the preceding claims, **characterized by** being used in an ore electrolysis process for obtaining nickel, zinc and other metals.
